# EUROPÄISCHE PATENTANMELDUNG

(11) **EP 1 895 088 A1**
(43) Veröffentlichungstag der Anmeldung: **05.03.2008**
(21) Anmeldenummer: 07016641.8
(22) Anmeldetag: 24.08.2007
(51) Int. Cl.: E06B 3/96, E06B 3/984

(54) **Fensterelement und Werkzeug zur Bearbeitung der Fensterkanteln**

(30) Priorität: 31.08.2006 DE 102006040901
(71) Anmelder: Leitz GmbH & Co. KG, 73447 Oberkochen (DE)
(72) Erfinder: Bahlmann, Hans, 49696 Molbergen/Resthausen (DE)
(74) Vertreter: Rehmann, Thorsten

(57) **Zusammenfassung**

Ein Fensterelement, bestehend aus einer Mehrzahl miteinander verbundener Holzkanteln (1, 1a, 2, 3, 4, 5) mit einer in Faserrichtung (F) des Holzes verlaufenden Längsseite und einer senkrecht zur Faserrichtung (H) verlaufenden Querseite zeichnet sich dadurch aus, dass zumindest ein Teil der Holzkanteln (2, 4) an der Querseite wenig-stens über Teilbereiche der Oberfläche eine Riffelung (8) aufweist.

## Beschreibung

Die Erfindung betrifft ein Fensterelement, bestehend aus einer Mehrzahl miteinander verbundener Holzkanteln, mit einer in Faserrichtung des Holzes verlaufenden Längsseite und einer senkrecht zur Faserrichtung verlaufenden Querseite (Hirnholz) sowie ein Fräswerkzeug zur Bearbeitung des Hirnholzes der Kanteln.

Ein Holzfenster besteht prinzipiell aus den Elementen Blendrahmen (Zarge) und Flügelrahmen (Flügel), die aus miteinander horizontal und vertikal verbundenen Kanteln bestehen. Bei großen Fensteröffnungen kann der Blendrahmen durch senkrechte Rahmenelemente (Pfosten oder Setzholz) und waagerechte Rahmenelemente (Riegel bzw. Kämpfer) unterteilt sein. Die Verbindung der Rahmenelemente sowohl bei Blendrahmen als auch bei Flügelrahmen erfolgt üblicherweise dadurch, dass die mit einer Schlitz- und Zapfen-Verbindung oder mittels eines Konterprofiles versehenen Kanteln miteinander verleimt werden. Schlitz- und Zapfen-Verbindungen werden überwiegend bei Eckverbindungen eingesetzt, ein Konterprofil überwiegend bei Pfosten.

An den äußeren Verbindungsstellen der Rahmenelemente, den sogenannten Brüstungsfugen, treten insbesondere bei der Verbindung von Pfosten und seitlichen Rahmenelementen verstärkt Frühschäden durch Feuchtebefall auf. Durch die Klimawechselbelastung öffnet sich die Leimfuge an der Brüstung und Feuchtigkeit kann in die Fuge eindringen und zieht in die Fasern des Hirnholzes. Hirnholz ist besonders gefährdet, zu verwittern, da durch die quer zur Faserrichtung verlaufende Schnittfläche Kapillare in Faserrichtung des Holzes ausgebildet werden. Die in die Fasern des Hirnholzes einziehende Feuchtigkeit führt zum Quellen des Holzes. Abnehmen der Feuchtigkeit durch Temperaturanstieg führt zum Schwinden des Holzes, wodurch es im Schutzlack des Rahmens zu Rissbildung kommt, was langfristig zu innerer Fäulnis führen kann. Zur Verbesserung der Fugendichtigkeit wird deshalb vielfach ein elastischer Fugenfüller verwendet, der in der Regel vor dem Lackieren des Fensterrahmens in einem zusätzlichen manuellen Arbeitsgang auf die Fuge aufgebracht werden muss.

Schlitz-, Zapfen- und Konterprofile werden stirnseitig an die Holzkanteln angefräst. Senkrecht zur Faserrichtung wird dabei im Gegenlauf gefräst (Hirnholzbearbeitung), wodurch es zu zwei bearbeitungstechnischen Schwierigkeiten kommt. Beim Schneidenaustritt am Ende des Werkzeuges kommt es zum Spalten und Wegbrechen der äußeren Holzfasern, da sie keinen Gegendruck gegen die Werkzeugschneiden ausüben können. Durch Anpressen eines dem Fräsprofil angepassten Konterholzes (Gegendruckstück) wird dieser Effekt deutlich verringert, aber er kann nicht vollständig vermieden werden, da auch das Konterholz einem gewissen Verschleiß unterliegt und nicht immer exakt anliegt. Diese Faserausrisse liegen später an den Ecken der Brüstungsfugen des Fensterrahmens und stellen dort bereits eine Vorschädigung des Holzes dar. Aufgrund der Dichteunterschiede innerhalb des Holzes, was durch die Wachstumsperioden Früh- und Spätholz (Jahresringe) hervorgerufen wird, hat das Holz gegenüber dem Schneidendruck ein unterschiedliches Nachgiebigskeitsverhalten. Das weichere Frühholz federt stärker zurück als das härtere Spätholz, was zu einer geringen Welligkeit des gefrästen Hirnholzes der Kanteln führt. Konstruktionsbedingt verlaufen die Jahresringe mehr oder weniger senkrecht zur Brüstungsfuge.

Beim Verleimen mit dem Längsholz eines anderen Rahmenelementes entsteht keine gleichmäßige Leimfuge. Der Leim kann beim Verpressen herausgequetscht werden. Es bilden sich lokale Kontaktstellen an den höher liegenden Hirnholzbereichen aus, dazwischen entstehen kapillare Hohlräume, in die mit der Zeit von außen Feuchtigkeit in die Fuge eindringen kann, was im Ergebnis zu den bereits beschriebenen Frühschäden führt.

Von dieser Problemstellung ausgehend liegt der Erfindung die Aufgabe zugrunde, das eingangs beschriebene Holzfenster konstruktiv so zu verbessern, dass Bearbeitungsfehler beim Fräsen vermieden werden und eine höhere Fugendichtheit erreicht wird.

Zur Problemlösung zeichnet sich ein gattungsgemäßes Fensterelement dadurch aus, dass zumindest ein Teil der Holzkanteln an der Querseite (Hirnholz) wenigstens über Teilbereiche der Oberfläche eine Riffelung aufweist.

Die Riffelung wird dadurch erzielt, dass die Hirnholzprofile an den Kanteln mit einem Fräser bearbeitet werden, dessen Schneiden mit einer Mikroverzahnung ausgebildet sind. Die Mikroverzahnung bewirkt einen zeitlich verzögerten Eingriff der Werkzeugschneide gegenüber einer glatten oder geraden Schneide. Durch das Verzahnungsprofil entsteht ein ziehender Schnitt, was einen sanfteren Verlauf der Schnittkräfte während des Schneideneingriffes zur Folge hat. Der Schnittdruck auf das Holz ist folglich geringer, wodurch sich das Ausrissverhalten am Schneidenaustritt verbessert und das unterschiedliche Nachgiebigkeitsverhalten zwischen Früh- und Spätholz weniger Einfluss auf die Oberflächengüte der gefrästen Fläche erhält.

Dadurch, dass die Mikroverzahnung nur am Hirnholz angefräst wird, wird ein definierter Raum für den Leim der Klebeverbindung geschaffen. Beim Verpressen der Rahmenteile wird der Leim nicht aus der Fuge herausgequetscht, sondern er verbleibt in den Vertiefungen der Riffelungen. Dadurch wird zum einen das Hirnholz durch den Leim gegen Eindringen von Feuchtigkeit versiegelt und zum anderen kann das in der Klebefuge verbliebene Leimvolumen Spannungen, die durch die Klimawechselbelastungen entstehen, besser ausgleichen, wodurch der Rissbildung in der Brüstungsfuge wirksam entgegengetreten wird.

Des Weiteren entsteht beim Zusammenpressen der Rahmenteile zwischen den Riffelspitzen des Hirnholzes und dem korrespondierenden Längsprofil ein Linienkontakt. Durch diese geringen Kontaktflächen werden verbliebene Unebenheiten zwischen Früh- und Spätholz beim Verpressen ausgeglichen. Die Passgenauigkeit der Verbindung wird durch diese Maßnahme erhöht.

Vorzugsweise weist die Riffelung eine Profiltiefe von 0,2 bis 1,5 mm, insbesondere von 0,4 bis 0,8 mm auf.

Die Mikroverzahnung kann als Spitzverzahnung oder als Trapezverzahnung ausgebildet sein. Der Winkel zwischen den Flanken der Verzahnung beträgt vorzugsweise 20° bis 120° und insbesondere vorzugsweise 40° bis 90°.

Bezogen auf das Holzprofil ist das Trapezprofil im Grund vorzugsweise spitz und an der Spitze abgerundet ausgebildet.

Insbesondere vorteilhaft ist es, wenn die Riffelung über die volle Oberfläche der Querseite ausgebildet und insbesondere weiter vorteilhaft, wenn die Tiefe der Riffelung über die Oberfläche gleichmäßig ausgebildet ist.

Die Profilteilung der Riffelung beträgt bevorzugt zwischen 0,3 und 3 mm.

Bevorzugt werden nur die Hirnholzseiten der vertikal verlaufenden Holzkanteln mit einer Riffelung versehen.

Wenn die Riffelung der Stirnseite, bezogen auf die Faserrichtung der Holzkantel, mit der sie verbunden ist, parallel zu deren Faserrichtung verläuft, die Riffelung also parallel zur Brüstungsfuge verläuft, wirken die äußeren Verzahnungsriefen in Verbindung mit dem Leim wie eine Dichtlippe für die Fuge.

In einem Bewitterungstest hat sich gezeigt, dass die Fugendichtheit bei Verwendung des Riffelprofils ohne zusätzlichen Fugenfüller mindestens gleichwertig zu einem konventionell gefertigten Fenster mit Fugenfüller ist.

Außerdem haben mechanische Bruchversuche gezeigt, dass die Riffelung keine negativen Auswirkungen auf die Festigkeit der Klebeverbindung hat. Die Verbindung bricht im Längsholzbereich zwischen den Fasern nicht in der Leimfuge. Da durch die Riffelung die Klebefuge überall mit Leim gefüllt ist, liegt die Bruchfestigkeit gegenüber ungeriffelten Verbindungen höher.

Ein Fräswerkzeug zur Erzeugung einer Riffelung im Hirnholz von Holzkanteln für Fensterelemente zeichnet sich durch eine Vielzahl regelmäßig über den Umfang verteilter Schneidflächen aus, die so angeordnet sind, dass sie eine Mikroverzahnung mit einer gleichmäßigen Profiltiefe von 0,2 bis 1,5 mm ausbilden.

Vorzugsweise beträgt die Profiltiefe 0,4 bis 0,8 mm.

Die Profilflanken, der die Mikroverzahnung ausbildenden Zähne sind vorzugsweise geradlinig ausgebildet. Sie können aber auch leicht konvex oder konkav ausgebildet sein.

Insbesondere vorteilhaft ist es, wenn die Schneidflächen identisch ausgebildet sind. Die Schneidflächen können aber auch unterschiedlich ausgebildet sein, was insbesondere dann vorteilhaft ist, wenn eine Riffelung (Verzahnungsprofil) mit einer sehr kleinen Profiltiefe erzeugt werden soll. Durch die Aufteilung des Profils auf mehrere Messer entsteht das eigentliche Profil erst durch Überlagerung der Einzelschneiden bei der Rotation des Werkzeuges. Das Werkzeug kann auch mehrteilig aus einer Vielzahl von Schneidelementen, die axial aneinander gelegt werden, zusammengesetzt werden.

Mit Hilfe einer Zeichnung sollen Ausführungsbeispiele der Erfindung nachfolgend näher erläutert werden.

Es zeigt:
- Figur 1: ein Holzfenster in Draufsicht;
- Figur 2: die Teilschnittdarstellung einer Rahmeneckverbindung eines herkömmlichen Fensterelementes in perspektivischer Darstellung mit typischen Frühschäden;
- Figur 3: typische Frühschäden an einem Holzfenster;
- Figur 4: eine Rahmeneckverbindung in perspektivischer Ansicht;
- Figur 4a: eine vergrößerte Darstellung aus Figur 4;
- Figur 5: die perspektivische Darstellung eines Zapfenprofiles nach dem Stand der Technik;
- Figur 6: die perspektivische Darstellung eines Konterprofiles einer unteren Rahmenverbindung nach dem Stand der Technik;
- Figur 7: die Darstellung nach Figur 4 mit einer erfindungsgemäßen Ausgestaltung der Kanteln;
- Figur 8: die Darstellung des Konterprofiles einer unteren Rahmenverbindung mit Riffelprofil;
- Figur 9: eine perspektivische Rahmeneckverbindung nach dem Stand der Technik;

- Figur 10: eine perspektivische Teildarstellung einer erfindungsgemäß ausgebildete Rahmeneckverbindung;
- Figur 11: die perspektivische Darstellung eines Zapfenprofils einer unteren Schlitz- und Zapfenrahmen-Verbindung mit Riffelprofil;
- Figur 12: die perspektivische Darstellung einer Rahmenverbindung für Pfosten unten mit Konterprofil nach dem Stand der Technik;
- Figur 13: die perspektivische Darstellung einer Rahmenverbindung für Pfosten unten mit Konterprofil mit Riffelprofil;
- Figur 14: die Teilansicht eines Werkzeuges mit geriffelten Profilschneiden zur Herstellung einer Schlitz- und Zapfen-Verbindung;
- Figur 15: die Teilansicht eines Werkzeuges zur Herstellung eines geriffelten Konterprofiles;
- Figur 16: sechs Beispiele für Riffelprofile;
- Figur 17: ein Beispiel für die Aufteilung des Fertigprofils auf mehrere Werkzeugschneiden;
- Figur 18: ein Werkzeug in perspektivischer Darstellung.

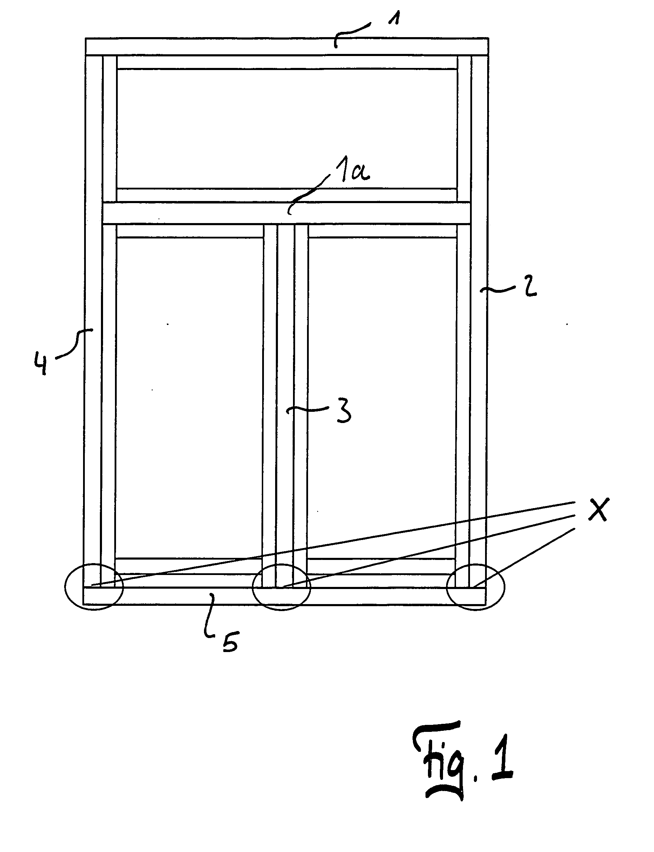

Figur 1 zeigt ein Fensterelement, bestehend aus einer Mehrzahl miteinander verbundener Holzkanteln 1, 1a, 2, 3, 4, 5, die vertikal und horizontal miteinander verbunden sind. Bei dem gezeigten Fensterelement für große Öffnungen ist der aus den Kanteln 1, 2, 4, 5 gebildete Flügelrahmen durch einen Riegel oder Kämpfer 1a und einen Pfosten 3 unterteilt. Die Verbindung kann über Schlitz- und Zapfenprofile oder über ein Konterprofil erfolgen. An den Verbindungsstellen sind die Kanteln 1, 1 a, 2, 3, 4, 5 miteinander verleimt. Die mit X gekennzeichneten Stellen sind besonders witterungsgefährdet, da die vertikal verlaufenden Kanteln 2, 3, 4 dort mit dem Hirnholz, also mit der quer zur Faserrichtung des Holzes verlaufenden Schnittfläche, aufliegen. Hirnholz ist witterungsempfindlich, da durch die unterschiedlichen Härtegrade des Frühholzes 9 bzw. des Spätholzes 9a und dem sich in vertikaler Richtung erstreckenden Faserverlauf Kapillare entstehen, die Feuchtigkeit aufnehmen, was zum Quellen des Holzes und zur Verrottung führen kann.

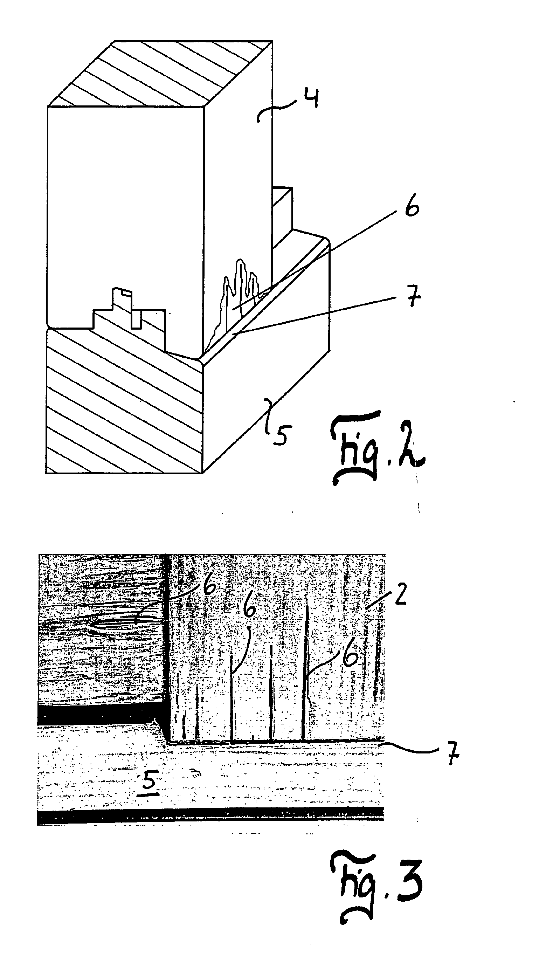

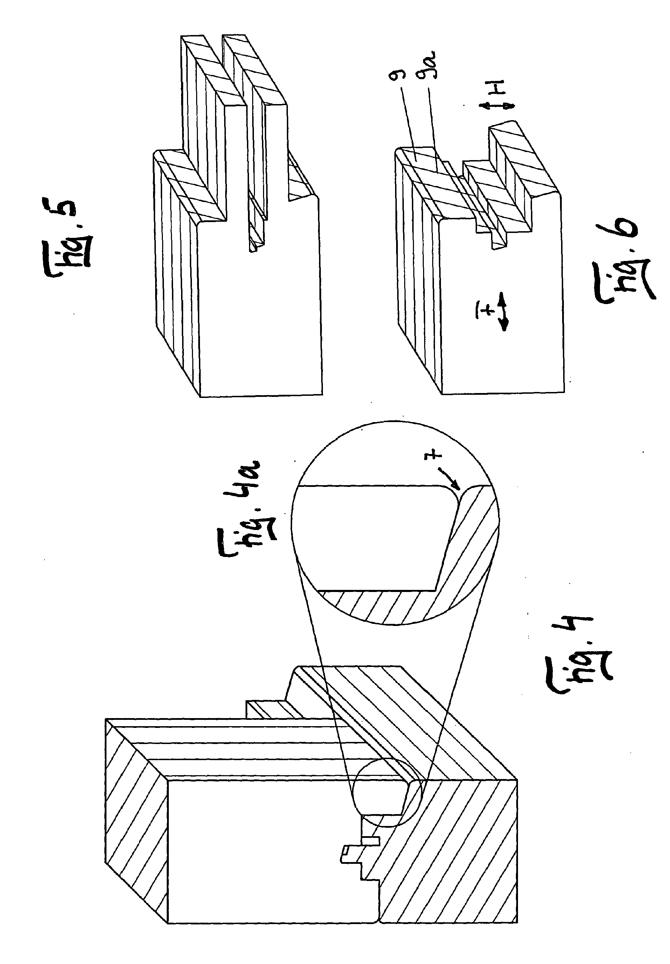

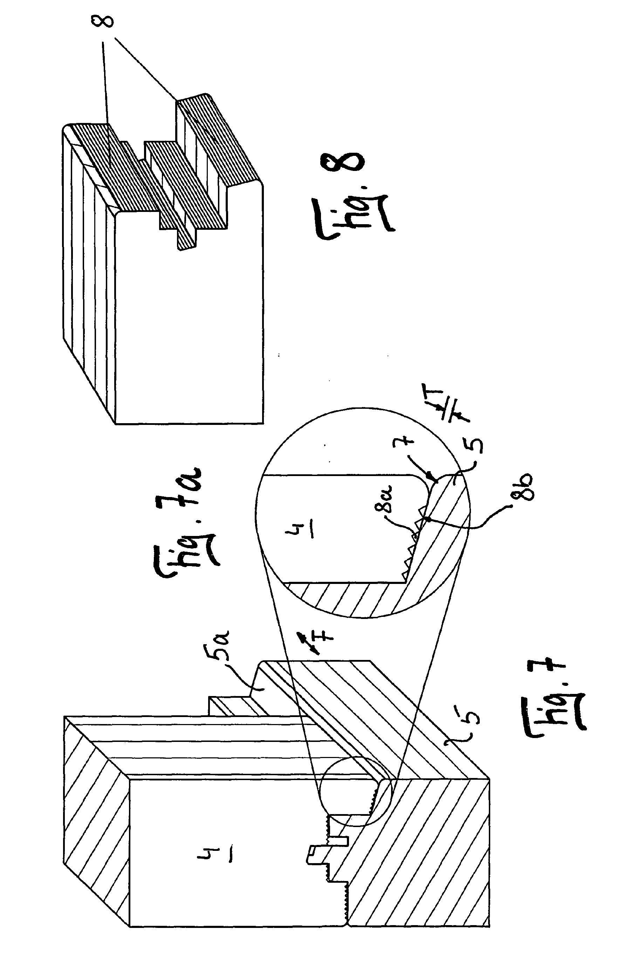

Figuren 2 und 3 zeigen typische Frühschäden 6 an den Holzkanteln 3, 4 und 5, die dadurch entstehen, dass Feuchtigkeit über die außen liegende, also der Witterung ausgesetzte Brüstungsfuge 7 in das Hirnholz eindringt.

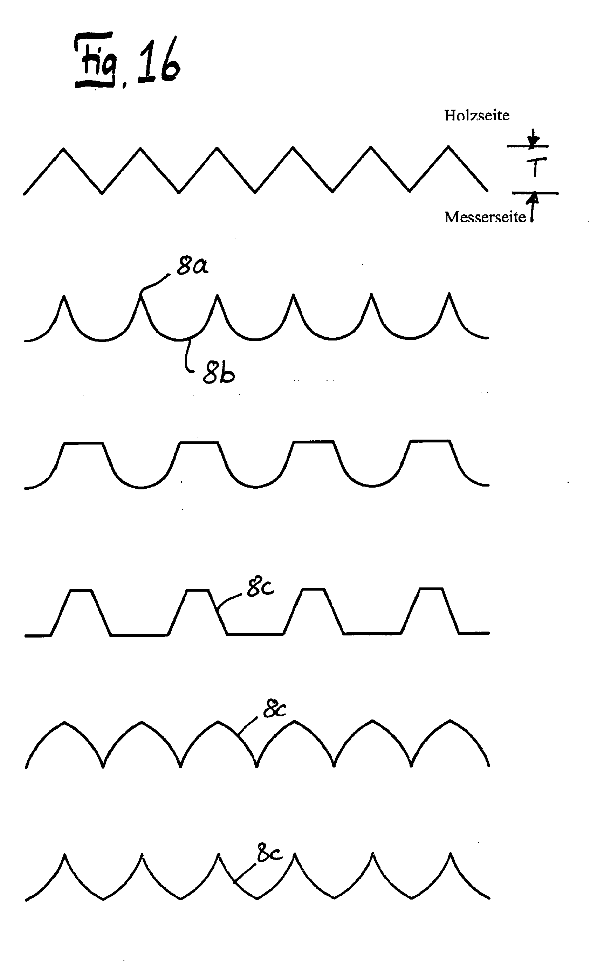

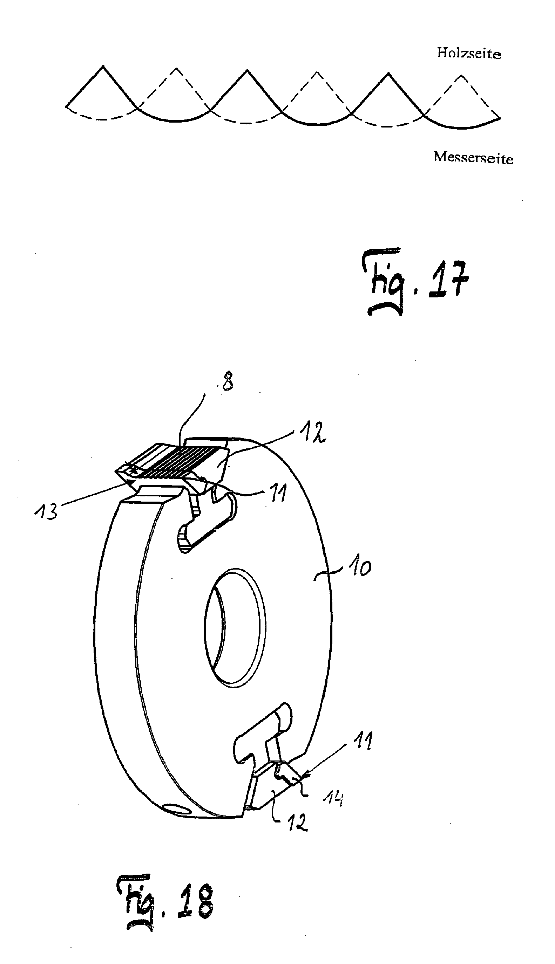

Bei der erfindungsgemäßen Ausgestaltung der vertikal verlaufenden Holzkanteln 2, 3, 4 ist das Hirnholz zumindest teilweise mit einer Riffelung 8 versehen, die eine Mikroverzahnung bildet. Die Verzahnungsspitzen 8b verlaufen, wie beispielsweise Figuren 10, 11 und 16 zeigen, in Faserrichtung F der waagerecht verlaufenden Kantel 5. Wenn die Kanteln 4, 5 miteinander verleimt werden, drückt sich der Leim in die durch die Riffelung 8 erzeugten tiefer liegenden Rillen 8a ein. Die Spitzen 8b der Riffelung sind gegenüber einer vollen Fläche elastischer. Werden die Kanteln 4, 5 miteinander verpresst, wird der Leim weiter in die Rillen 8a gequetscht und die Spitze 8b der Riffelung 8 zusammengedrückt. Dadurch entsteht eine feste Verbindung der Kanteln 4 und 5 miteinander. Durch die in Faserrichtung F der Kantel 5 verlaufenden Spitzen 8b werden eine Vielzahl von Dichtlippen auf der Auflagefläche 5a der Kantel 5 ausgebildet, wodurch die Witterungsbeständigkeit der Verbindung erhöht wird. Selbst wenn der Leim durch Klimaschwankungen (Quellen und Schwinden) partiell reißen sollte, bleibt die Abdichtung durch die Vielzahl der Rillen 8a erhalten.

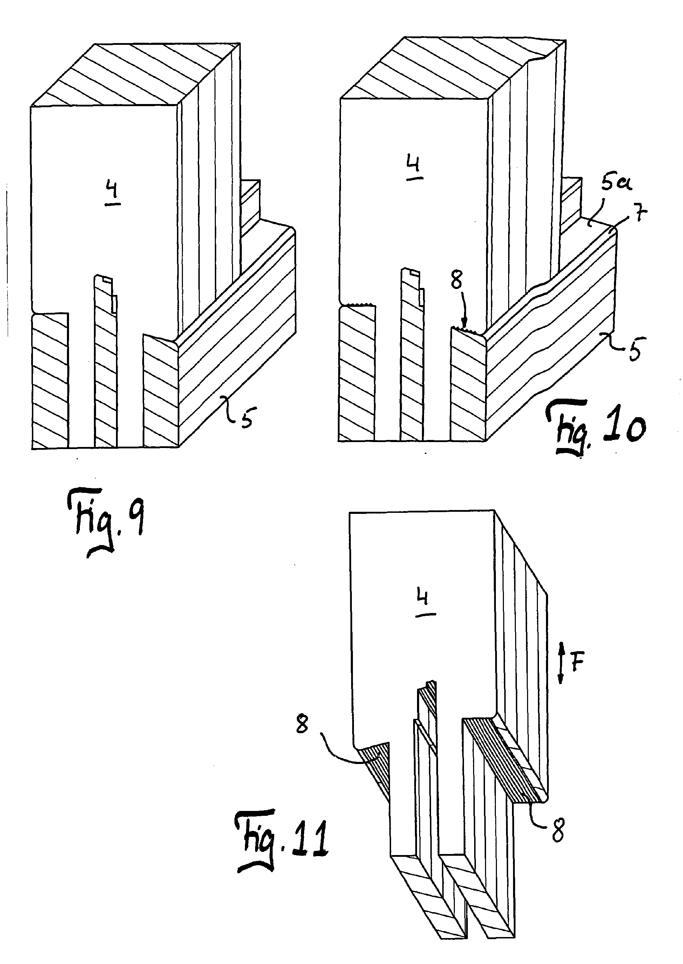

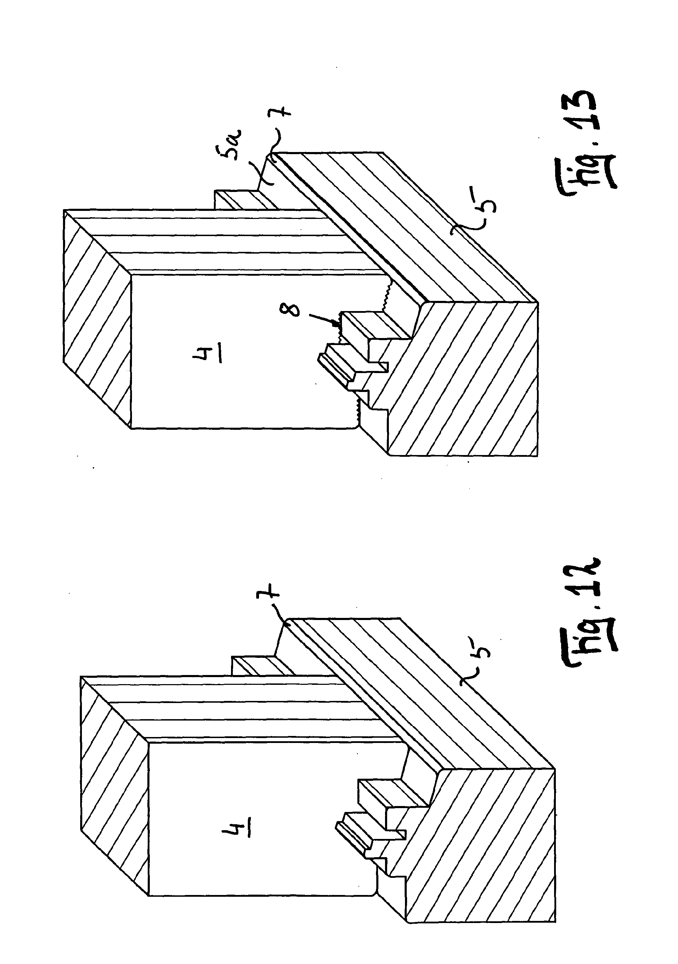

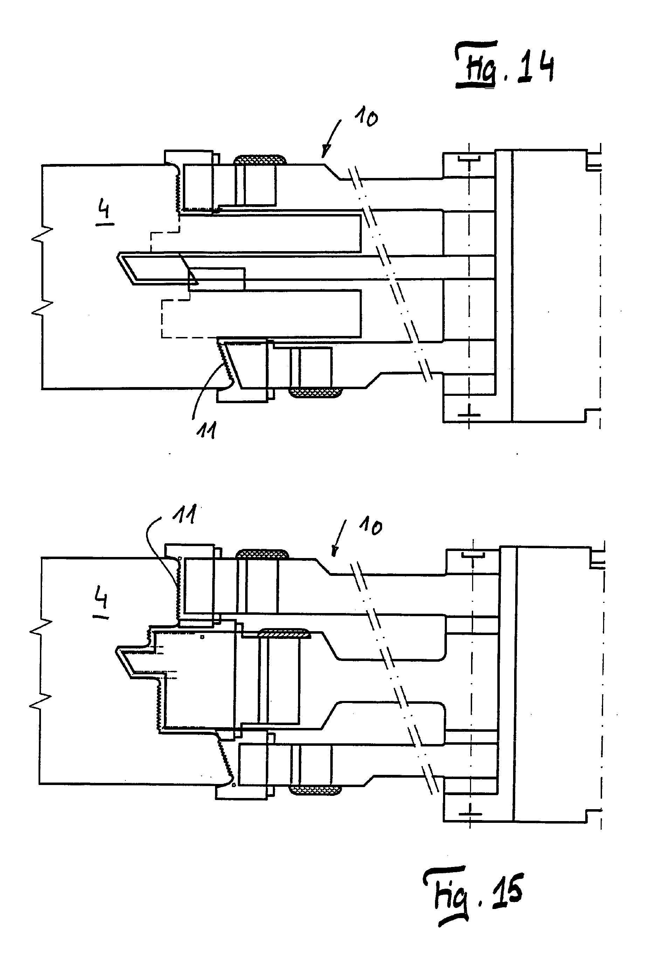

Bei den in Figuren 8 und 11 dargestellten Profilierungen ist die Riffelung 8 über die volle Oberseite des Hirnholzes ausgebildet. Figur 7 und 7a zeigt deutlich, wie durch die Spitzen 8b "Dichtlippen" auf der Anlagefläche 5a der Kantel 5 ausgebildet werden und durch die Rillen 8a Freiräume geschaffen sind, in die der Leim gequetscht wird.

Figuren 14, 15 und 18 zeigen die Ansicht eines Fräsers 10 mit eingesetzten Messern 12, auf die eine Bestückungsplatte 14 aufgelötet oder aufgeklebt ist, an der die nachschleifbare Spanfläche 13 ausgebildet ist. Die Messer 12 sind mit mikroverzahnten Schneiden 11 versehen, um in die Kantel 4 eine entsprechende Riffelung einzufräsen. Die Schneiden 11 sind als spitze Verzahnung oder als Trapezverzahnung mit einem Winkel zwischen 20° bis 120°, vorzugsweise 40° bis 90° versehen. Das Profil kann komplett in einer Werkzeugschneide 11 abgebildet sein. Zum Erzeugen eines spitzen Verzahnungsprofils mit sehr kleiner Profiltiefe T ist es vorteilhaft, das Profil auf mehrere Schneiden 11 aufzuteilen, wobei erst bei der Rotation des Werkzeuges 10 durch Überlagerung der Einzelschneiden das eigentliche Profil entsteht (vgl. Figur 17).

Figur 16 sind diverse Beispiele für Riffelprofile mit der Profiltiefe T entnehmbar. Auf der Zeichnung oben ist die Holzseite und auf der Zeichnung unten die Werkzeugseite dargestellt. Es ist ersichtlich, dass die Riffelung 8 als Trapezprofil ausgeführt werden kann, wobei der Profilgrund 8a spitz und die Profilspitze 8b rund ausgebildet sein können. Die Profilflanken 8c können geradlinig oder leicht konkav bzw. leicht konvex ausgebildet sein. Vorzugsweise sind sie aber symmetrisch aufgebaut. Der Winkel zwischen den Profilflanken bzw. den Kanten der Profilflanken beträgt 20° bis 120°, vorzugsweise 40° bis 90°. Die Profiltiefe T, die vorzugsweise gleichmäßig im Hirnholz ausgebildet ist, beträgt maximal 1,5 mm, vorzugsweise beträgt sie 0,4 bis 0,8 mm, sie kann aber auch auf bis zu 0,2 mm reduziert werden. Die Profilteilung ist gleichmäßig ausgebildet. Die Riffelung 8 ist bevorzugt unmittelbar an der Sichtfuge der Kantel 4 ausgebildet, damit die Wirkung einer Dichtlippe möglichst dicht an der Brüstungsfuge 7 eintritt.

### Bezugszeichenliste:

- 1: Kantel
- 1a: Kämpfer
- 2: Kantel
- 3: Kantel, Pfosten
- 4: Kantel
- 5: Kantel
- 5a: Auflagefläche
- 6: Schadstelle/Frühschäden
- 7: Brüstungsfuge
- 8: Riffelung
- 8a: Profilgrund/Rillen
- 8b: Profilspitze
- 8c: Profilflanke
- 9: Frühholz, weich
- 9a: Spätholz, hart
- 10: Fräser
- 11: Schneidfläche
- 12: Messer
- 13: Spanfläche
- 14: Bestückungsplatte
- F: Faserrichtung
- H: senkrecht zur Faserrichtung / (Hirnholz)
- T: Profiltiefe

## Patentansprüche

1. Fensterelement, bestehend aus einer Mehrzahl miteinander verbundener Holzkanteln (1, 2, 3, 4, 5) mit einer in Faserrichtung (F) des Holzes verlaufenden Längsseite und einer senkrecht zur Faserrichtung (H) verlaufenden Querseite, **dadurch gekennzeichnet, dass** zumindest ein Teil der Holzkanteln (2, 3, 4) an der Querseite wenigstens über Teilbereiche der Oberfläche eine Riffelung (8) aufweist.

2. Fensterelement nach Anspruch 1, **dadurch gekennzeichnet, dass** die Riffelung (8) über die volle Oberfläche der Querseite ausgebildet ist.

3. Fensterelement nach Anspruch 1 oder 2, **dadurch gekennzeichnet, dass** die Riffelung (8) eine Profiltiefe (T) von 0,2 bis 1,5 mm aufweist.

4. Fensterelement nach Anspruch 3, **dadurch gekennzeichnet, dass** die Riffelung (8) eine Profiltiefe (T) von 0,4 bis 0,8 mm aufweist.

5. Fensterelement nach einem der Ansprüche 1 bis 4, **dadurch gekennzeichnet, dass** die Riffelung (8) durch eine Verzahnung erzeugt ist.

6. Fensterelement nach Anspruch 5, **dadurch gekennzeichnet, dass** die Verzahnung als Spitzverzahnung ausgebildet ist.

7. Fensterelement nach Anspruch 5, **dadurch gekennzeichnet, dass** die Verzahnung als Trapezverzahnung ausgebildet ist.

8. Fensterelement nach Anspruch 6 oder 7, **dadurch gekennzeichnet, dass** der Winkel zwischen den Flanken (8c) der Verzahnung 20° bis 120° beträgt.

9. Fensterelement nach Anspruch 8, **dadurch gekennzeichnet, dass** der Winkel zwischen den Flanken (8c) der Verzahnung 40° bis 90° beträgt.

10. Fensterelement nach Anspruch 7, **dadurch gekennzeichnet, dass**, bezogen auf das Holzprofil das Trapezprofil im Grund (8a) spitz und an der Spitze (8b) gerundet ist.

11. Fensterelement nach Anspruch 3 oder 4, **dadurch gekennzeichnet, dass** die Profiltiefe (T) der Riffelung (8) über die Oberfläche gleichmäßig ausgebildet ist.

12. Fensterelement nach einem der Ansprüche 3 bis 10, **dadurch gekennzeichnet, dass** die Profilteilung der Riffelung (8) zwischen 0,3 und 3 mm beträgt.

13. Fensterelement nach einem oder mehreren der vorstehenden Ansprüche, **dadurch gekennzeichnet, dass** nur die Querseiten der vertikal verlaufenden Holzkanteln (2, 4) eine Riffelung (8) aufweisen.

14. Fensterelement nach einem oder mehreren der vorstehenden Ansprüche, **dadurch gekennzeichnet, dass** die Riffelung (8) der Querseite der Kantel (2, 4) bezogen auf die Kantel (5), mit der sie verbunden ist, parallel zu deren Faserrichtung (F) verläuft.

15. Fensterelement nach einem oder mehreren der vorstehenden Ansprüche, **dadurch gekennzeichnet, dass** die Kanteln (1, 2, 3, 4, 5) miteinander verleimt sind.

16. Fräswerkzeug zur Erzeugung einer Riffelung (8) im Hirnholz von Holzkanteln (2, 3, 4) für Fensterelemente mit einer Vielzahl regelmäßig über den Umfang verteilter Schneidflächen (11), die so angeordnet sind, dass sie eine Mikroverzahnung mit einer gleichmäßigen Profiltiefe von 0,2 bis 1,5 mm ausbilden.

17. Fräswerkzeug nach Anspruch 16, **dadurch gekennzeichnet, dass** die Profiltiefe 0,4 bis 0,8 mm beträgt.

18. Fräswerkzeug nach Anspruch 16 oder 17, **dadurch gekennzeichnet, dass** die Profilflanken der die Mikroverzahnung ausbildenden Zähne geradlinig ausgebildet sind.

19. Fräswerkzeug nach einem oder mehreren der vorstehenden Ansprüche, **dadurch gekennzeichnet, dass** die Schneidflächen (11) identisch ausgebildet sind.

20. Fräswerkzeug nach einem oder mehreren der Ansprüche 16 bis 18, **dadurch gekennzeichnet, dass** die Schneidflächen (11) unterschiedlich ausgebildet sind.

21. Fräswerkzeug nach einem der Ansprüche 16 bis 20, **dadurch gekennzeichnet, dass** die Schneidflächen (11) an auswechselbaren Messern (12) ausgebildet sind.

22. Fräswerkzeug nach Anspruch 21, **dadurch gekennzeichnet, dass** die Messer (12) nachschärfbar sind.

23. Fräswerkzeug nach Anspruch 22, **dadurch gekennzeichnet, dass** die Messer an der Spanfläche (13) nachschärfbar sind.
